# FASCICULE DE BREVET EUROPEEN

(11) **EP 3 828 082 B1**
(45) Date de publication et mention de la délivrance du brevet: **01.06.2022**
(21) Numéro de dépôt: 20207081.9
(22) Date de dépôt: 12.11.2020
(51) Int. Cl.: B64C 27/22, B64C 27/82, B64C 27/26

(54) **GIRAVION HYBRIDE COMPORTANT AU MOINS UNE HELICE PROPULSIVE OU TRACTIVE ET PROCEDE DE PILOTAGE ASSOCIE**
HYBRID-DREHFLÜGELFLUGZEUG MIT MINDESTENS EINEM PROPELLER IN PUSHER- ODER TRACTOR-KONFIGURATION, UND ENTSPRECHENDES STEUERUNGSVERFAHREN
HYBRID ROTORCRAFT COMPRISING AT LEAST ONE PUSHER OR TRACTOR PROPELLER AND ASSOCIATED CONTROL METHOD

(30) Priorité: 29.11.2019 FR 1913448
(43) Date de publication de la demande: 02.06.2021
(73) Titulaire: Airbus Helicopters, 13725 Marignane Cedex (FR)
(72) Inventeur: BARAIS, Olivier, 13820 ENSUES LA REDONNE (FR); EGLIN, Paul, 13830 ROQUEFORT LA BEDOULE (FR); GENEIX, Jérôme, 13140 MIRAMAS (FR)
(74) Mandataire: GPI Brevets

(56) Documents cités:
- CN-A- 108 750 092
- US-A1- 2015 100 181
- US-A1- 2017 225 794

## Description

La présente invention se rapporte au domaine des aéronefs à voilures tournantes dénommés en général giravions. Un giravion peut comporter au moins un rotor principal participant au moins à la sustentation du giravion et au moins un rotor arrière participant par exemple au pilotage selon une trajectoire en lacet du giravion.

Un aéronef hybride configuré pour voler à des vitesses d'avancement importantes par exemple supérieures à 200kts (noeuds) est aussi connu. Pour parvenir à une telle vitesse d'avancement, un aéronef hybride est équipé d'au moins une hélice propulsive ou tractive participant à la propulsion ou à la traction du giravion dans les airs et au contrôle du mouvement en lacet.

Les hélices propulsives ou tractives équipant ces aéronefs hybrides ainsi que leur rotor principal sont entraînés en rotation mécaniquement via une chaine cinématique et au moins un moteur à combustion. De telles architectures d'entrainement en rotation d'hélices propulsives ou tractives ont notamment été décrites par le demandeur dans les documents WO2008/142257, EP 2 233 396 EP 2 690 011 et EP 3 141 478.

Cependant l'arrêt uniquement de la rotation d'une ou des hélices propulsives ou tractives, par exemple lors d'une phase d'embarquement ou de débarquement de passagers, peut être délicat à réaliser

De plus, de telles architectures ne permettent pas d'obtenir de fait des lois de vitesse de rotation indépendantes entre le ou les rotors principaux et la ou les hélices propulsives ou tractives.

Par ailleurs, un la ou les hélices propulsives ou tractives doivent être localisées dans des zones du giravion pouvant être atteintes par la chaine cinématique de transmission de puissance.

Au surplus, une telle architecture engendre de fait des chaines cinématiques complexes, en particulier lorsque le giravion comporte plusieurs hélices propulsives ou tractives. La présente invention a alors pour objet de proposer un giravion permettant de s'affranchir des limitations mentionnées ci-dessus.

Ainsi, un but de l'invention est notamment de rendre plus simple, voire éventuellement flexible et modulaire une architecture de giravion hybride tout permettant une vitesse d'avancement accrue par rapport à un giravion conventionnel dépourvu d'une hélice propulsive ou tractive.

En outre, le document US2015100181 décrit quant à lui un aéronef à voilure tournante pourvu d'un système de propulsion électrique. L'aéronef à voilure tournante possède un rotor principal 216, une poutre de queue porteuse d'un rotor anti-couple 220, motorisé par un moteur électrique 218 qui lui est propre. L'aéronef à voilure tournante est aussi pourvu d'un rotor auxiliaire de propulsion 224, qui fournit à l'aéronef à voilure tournante une augmentation de poussée auxiliaire à celle du rotor principal 216. Le rotor principal 216 est mécaniquement couplé à un moteur électrique 214, lequel reçoit sa puissance électrique d'un ou plusieurs générateurs 204a-b. Le ou les générateurs 204a-b sont entrainés mécaniquement par au moins un moteur à combustion interne 202a-b. Le rotor auxiliaire de propulsion 224 est mécaniquement couplé à un moteur électrique 222, lequel reçoit sa puissance électrique du ou des générateurs 204a-b.

Cependant, ce document ne décrit pas l'utilisation d'un moteur à combustion présentant un arbre de sortie transmettant un couple moteur au rotor principal 216 et au rotor anti-couple 220.

Par ailleurs, le document CN108750092 décrit un drone inhabité. Ce drone possède un fuselage 1, un rotor principal 401, un rotor arrière 501, et des ailes fixes montées sur un cadre 101. Pour entrainer le rotor principal 401, le drone comporte également un moteur à combustion 402 relié à une boite de vitesse 403, ainsi qu'un générateur auxiliaire 404 alimenté électriquement par une batterie 405.

Lors de phases d'atterrissage ou de décollage, le rotor principal 401 peut être entraîné en rotation uniquement par le générateur auxiliaire 404.

A partir d'une certaine hauteur du drone dans les airs, le moteur à combustion 402 peut être démarré pour remplacer le générateur auxiliaire 404 et entraîner en rotation le rotor principal 401.

Le moteur à combustion 402 entraîne alors à la fois le rotor principal 401 et le générateur auxiliaire 404 pour permettre de recharger la batterie 405.

Cependant pendant toutes ces phases de vol, le rotor de arrière 501 est quant à lui entraîné en rotation par un moteur électrique 502.

Des hélices propulsives 302 sont montées sur des ailes 301. Pour entraîner ces hélices propulsives 302 des moteurs électriques 303 sont également montés sur les ailes 301. De tels moteurs électriques 303 sont alors alimentés en électricité par la batterie 403.

Cependant, quelle que soit la phase de vol, ce document ne décrit pas l'utilisation d'un moteur à combustion présentant un arbre de sortie et au moins une boite de transmission de puissance reliée à cet arbre de sortie agencé pour transmettre un couple moteur au rotor arrière 501.

Le document "Aerodynamic Trade Study of Compound Helicopter Concepts"; ROCHE Julian 2015. - cf. https://commons.erau.edu/cgi/viewcontent.cgi?article=1236&con text=edt étudie les caractéristiques de divers concepts d'hélicoptères hybrides. Ce document indique que des vitesses d'avancement relativement plus élevées sont possibles avec des hélicoptères hybrides, lesquels emploient des agencements auxiliaires de propulsion et / ou des ailes fixes afin d'alléger la tâche du rotor principal, notamment en termes d'avancement ou de portance. Toutefois, selon ce document, cet allégement désiré est souvent obtenu au prix de besoins plus élevés en consommation globale d'énergie, de poids ou de vitesse d'avancement. Ce document ne décrit pas de moteur électrique, mais des appareils où le rotor principal est motorisé par une turbine, elle-même mécaniquement reliée à un rotor arrière. Selon ce document, les appareils évoqués (X3, X2, etc.) présentent une architecture où les propulseurs sont dépendants de la motorisation - en général par turbine - d'entrainement du rotor principal.

Le document "Hybrid Helicopters: Compounding the Quest for Speed", VERTIFLITE, ROBB Raymond, 2006 - cf. https://web.archive.org/web/20060927042104if /http://www.vtol. org/pdf/summer06robb.pdF, retrace l'histoire de certains hélicoptères hybrides, qui non seulement prévoient une forme de soutien à la portance, mais également un ou des moyens propulsif à savoir des hélicoptères pourvus de divers types d'unités auxiliaires de propulsion, telles que hélices ou turbines. Ce document ne décrit pas de moteur électrique. Ainsi, les appareils cités présentent une architecture où les propulseurs sont dépendants de la motorisation - en général par turbine - d'entrainement du rotor principal.

Le document US2017225794 décrit quant à lui un aéronef à voilure tournante 100. Cet aéronef à voilure tournante 100 est pourvu d'un système d'entraînement combinant des moteurs thermique et électrique. Ce système possède un moteur à combustion 202 et un moteur électrique 208, et un rotor principal 102. Un premier sous-système d'entraînement de puissance comprend au moins le moteur 102 qui est couplé au rotor 5 et configuré pour fournir une première puissance à ce rotor. Un second sous-système d'entraînement de puissance est connecté en parallèle au premier sous-système d'entraînement de puissance et est configuré pour fournir une seconde puissance au rotor 5, lorsque la première puissance fournie par le premier sous-système d'entraînement de puissance est inférieure à une demande de puissance du rotor 5.

Ainsi, l'invention se rapporte à un giravion comportant une première installation motrice, au moins un rotor principal participant au moins à la sustentation du giravion dans les airs et au moins un rotor arrière porté par une poutre de queue du giravion, la première installation motrice comportant au moins un moteur à combustion, au moins un arbre de sortie du moteur à combustion et au moins une boite de transmission de puissance reliée à cet arbre de sortie agencé pour transmettre un premier couple moteur à un ou aux rotors principaux et à un ou aux rotors arrières.

Selon l'invention, un tel giravion est remarquable en ce qu'il comporte :
- au moins une hélice propulsive ou tractive indépendante du ou des rotors principaux, cette ou ces hélices propulsives ou tractives participant au moins à la propulsion ou à la traction du giravion,
- une seconde installation motrice comportant au moins un moteur électrique transmettant un second couple moteur à la ou aux hélices propulsives ou tractives et,
- au moins un organe de commande configuré pour générer une consigne de commande du ou des moteurs électriques.

Autrement dit, un tel giravion permet de rendre totalement indépendantes la ou les hélices propulsives ou tractives du ou des rotors principaux et du ou des rotors arrières. En effet, avec une telle architecture de giravion hybride, la consigne de commande du ou des moteurs électriques entrainant en rotation la ou aux hélices propulsives ou tractives peut être générée en étant décorrélée d'une consigne de commande du ou des rotors principaux.

Par ailleurs, les profils des pales du rotor principal, du rotor arrière et de la ou des hélices propulsives ou tractives peuvent ainsi être optimisés spécifiquement pour chacune des fonctions qu'ils réalisent.

Il en résulte alors la possibilité d'optimiser les émissions acoustiques et le rendement de la ou des hélices propulsives ou tractives en fonction par exemple des conditions de vol et/ou des conditions atmosphériques.

En outre, l'architecture d'un tel giravion est alors aisément modulable pour permettre d'adapter le choix de la motorisation ou des rotors principaux et/ou de la présence de la ou les hélices propulsives ou tractives en fonction par exemple d'une mission particulière ou des besoins d'un client en particulier.

De plus, une telle nouvelle architecture de giravion permet de réaliser aisément l'arrêt de la ou des hélices propulsives ou tractives de façon par exemple à faciliter un embarquement ou un débarquement de passager.

En outre, la ou les hélices propulsives ou tractives et la seconde installation motrice peuvent être agencées dans différentes zones du giravion. A titre d'exemples, plusieurs modes de réalisation peuvent correspondre à plusieurs variantes de l'invention. Ces modes de réalisation peuvent également être combinés entre eux sans sortir du champ de l'invention.

Ainsi, selon un premier mode de réalisation, la ou les hélices propulsives ou tractives et la seconde installation motrice peuvent être portées par la poutre de queue et être agencées au niveau d'un empennage arrière.

L'expression "empennage arrière" désigne un ensemble comprenant au moins un moyen de stabilisation en tangage et/ou en lacet. Un tel ensemble peut comprendre par exemple une dérive et/ou un stabilisateur en tangage, parfois dénommé "empennage" ou "empennage horizontal", et/ou des surfaces inclinées.

En d'autres termes, un tel positionnement de la ou des hélices propulsives ou tractives et de la seconde installation motrice est libre au niveau de l'empennage arrière du giravion et peut éventuellement nécessiter que de très simples modifications au niveau de l'architecture d'un giravion conventionnel. Par exemple, une partie voire l'intégralité d'un empennage arrière peut être remplacée par un autre empennage arrière comprenant la ou les hélices propulsives ou tractives et la seconde installation motrice. L'architecture est alors "aisément" modulaire.

Le giravion peut de plus comporter au moins une aile agencée en dessous du ou des rotors principaux suivant une direction en élévation Z parallèle à un axe de rotation du ou des rotors principaux.

En outre une telle aile permet par exemple d'améliorer la portance du giravion pour certaines phases de vol.

Selon un second mode de réalisation, la ou les hélices propulsives ou tractives et la seconde installation motrice peuvent être portées par une aile agencée en dessous du ou des rotors principaux suivant une direction en élévation Z parallèle à un axe de rotation du ou des rotors principaux.

Dans ce cas, l'empennage arrière n'est alors pas modifié et porte donc au moins un rotor arrière permettant notamment de contrôler le mouvement en lacet du giravion. La ou les hélices propulsives ou tractives et la seconde installation motrice sont agencés en dessous du ou des rotors principaux.

Par ailleurs, l'aile portant la ou les hélices propulsives ou tractives et la seconde installation motrice peut présenter de différentes formes. Une telle aile peut être ainsi sensiblement de type monoplan ou peut présenter une géométrie plus complexe dans laquelle plusieurs plans se rejoignent à leurs extrémités pour former par exemple une aile dite « en anneau » ou aile dite « annulaire ». Un tel type d'aile est également couramment désigné par les expressions en langue anglaise « box wing » ou « joined wing ».

En pratique, l'aile peut comporter une demi aile gauche et une demi aile droite agencées respectivement d'un coté gauche et d'un coté droit d'un plan antéropostérieur du giravion, le plan antéropostérieur étant défini par un plan médian orienté verticalement et s'étendant entre une zone avant et une zone arrière du giravion.

Autrement dit, l'aile portant la ou les hélices propulsives ou tractives et la seconde installation motrice peut s'étendre sensiblement transversalement de part et d'autre du plan antéropostérieur.

Selon un exemple de réalisation de l'invention, la ou les hélices propulsives ou tractives peuvent comporter au moins deux hélices propulsives ou tractives appartenant à un premier groupe, le premier groupe étant porté par la demi aile gauche et la ou les hélices propulsives ou tractives peuvent comporter au moins deux hélices propulsives ou tractives appartenant à un second groupe, le second groupe étant porté par la demi aile droite.

De cette manière, chacun des premier et second groupes est agencé sur une demi aile gauche ou droite.

Selon un autre aspect de l'invention, le premier groupe d'au moins deux hélices propulsives ou tractives et le second groupe d'au moins deux autres hélices propulsives ou tractives peuvent comporter respectivement chacun un même nombre N d'hélices propulsives ou tractives.

Par exemple, un tel nombre N peut avantageusement être égal à 2, à 3 ou encore à 4.

Avantageusement, le premier groupe d'au moins deux hélices propulsives ou tractives et le second groupe d'au moins deux autres hélices propulsives ou tractives peuvent être agencés symétriquement par rapport au plan antéropostérieur du giravion.

Par conséquent, en plus du nombre identique N d'hélices propulsives ou tractives sur chaque demi aile, les premier et second groupes d'au moins deux hélices propulsives ou tractives peuvent être positionnés symétriquement l'un par rapport à l'autre au regard du plan antéropostérieur

Selon un autre aspect, le ou les moteurs à combustion peuvent être choisis parmi le groupe comportant les moteurs thermiques à pistons, les moteurs thermiques rotatifs et les turbomoteurs.

En effet, de tels moteurs permettent d'atteindre une autonomie importante pour une masse embarquée relativement faible. De façon préférentielle, un ou deux turbomoteurs peuvent être utilisés pour garantir un niveau optimal de puissance.

La présente invention a aussi pour objet le procédé de pilotage du giravion précité.

Selon l'invention, un tel procédé de pilotage est remarquable en ce que, dans un mode de fonctionnement normal, le procédé de pilotage comporte au moins une étape de commande normale du ou des rotors arrières pour générer au moins un troisième couple sur une structure porteuse du giravion et, dans un mode de fonctionnement d'urgence, le procédé de pilotage comporte au moins une étape de commande d'urgence de la ou des hélices propulsives ou tractives pour générer le troisième couple sur la structure porteuse du giravion.

En d'autres termes, dans le mode de fonctionnement normal seul le ou les rotos arrières sont utilisés pour par exemple contrôler un mouvement en lacet du giravion. Dans ce mode de fonctionnement normal, la ou les hélices propulsives ou tractives ne sont utilisées que pour permettre d'augmenter la vitesse d'avancement de l'aéronef.

La ou les hélices propulsives ne sont donc a priori pas dimensionnées pour réaliser une fonction d'anticouple mais sont optimisées pour au moins participer à l'avancement du giravion. Ce dimensionnement non optimisé de la ou des hélices propulsives ou tractives est néanmoins suffisant en cas d'urgence et donc par exemple en cas de panne du ou des rotors arrières.

En pratique, dans le mode de fonctionnement d'urgence, le troisième couple peut être généré en faisant varier une poussée gauche d'au moins une hélice propulsive ou tractive gauche par rapport à une poussée droite d'au moins une hélice propulsive ou tractive droite, la ou les hélices propulsives ou tractives gauche et la ou les hélices propulsives ou tractives droite étant agencées respectivement d'un coté gauche et d'un coté droit d'un plan antéropostérieur du giravion, le plan antéropostérieur étant défini par un plan médian orienté verticalement et s'étendant entre une zone avant et une zone arrière du giravion.

Autrement dit, dans le mode de fonctionnement d'urgence correspondant par exemple à une panne du ou des rotors arrières, un différentiel de poussée peut être réalisé entre au moins une hélice propulsive ou tractive gauche et au moins une hélice propulsive ou tractive droite.

Comme indiqué précédemment, le troisième couple est alors généré par les hélices propulsives ou tractives gauche et droite, bien qu'étant non optimisées pour cette fonction d'anticouple.

L'invention et ses avantages apparaîtront avec plus de détails dans le cadre de la description qui suit avec des exemples donnés à titre illustratif en référence aux figures annexées qui représentent :
[Fig 1] la figure 1, une vue de dessus d'un premier exemple de giravion conforme à l'invention,
[Fig 2] la figure 2, une vue de dessus d'un deuxième exemple de giravion conforme à l'invention,
[Fig 3] la figure 3, une vue de dessus d'un troisième exemple de giravion conforme à l'invention, et
[Fig 4] la figure 4, un schéma de principe illustrant un procédé de pilotage conforme à l'invention.

Les éléments présents dans plusieurs figures distinctes sont affectés d'une seule et même référence.

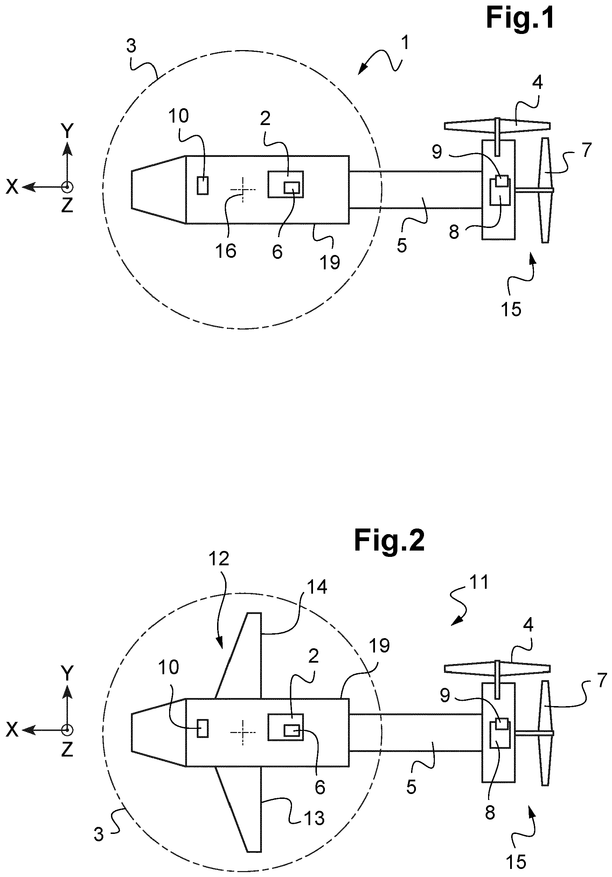

Trois directions X, Y et Z orthogonales les unes par rapport aux autres sont représentées sur les figures 1 à 3.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

Telle que représentée à la figure 1, l'invention se rapporte donc à un giravion 1 comportant une première installation motrice 2 montée sur une structure porteuse 19, au moins un rotor principal 3 participant au moins à la sustentation du giravion 1 dans les airs et au moins un rotor arrière 4 porté par une poutre de queue 5 permettant notamment de contrôler le mouvement du giravion 1 selon son axe de lacet.

En outre, la première installation motrice 2 illustrée comporte au moins un moteur à combustion 6 et permet de transmettre un premier couple moteur au rotor principal 3 et au rotor arrière 4. Un tel moteur à combustion 6 peut être choisi par exemple parmi le groupe comportant les moteurs thermiques à pistons, les moteurs thermiques rotatifs et les turbomoteurs.

Quelle que soit la réalisation, la première installation motrice 2 peut de plus comporter au moins un arbre de sortie du moteur à combustion 6 et au moins une boite de transmission de puissance reliée à cet arbre de sortie. En outre un tel giravion 1 comporte une hélice propulsive ou tractive 7 indépendante du rotor principal 3. Une telle hélice propulsive ou tractive 7 participe alors à la propulsion ou à la traction du giravion 1.

Par ailleurs, le giravion 1 comporte une seconde installation motrice 8 comportant au moins un moteur électrique 9 transmettant un second couple moteur à l'hélice propulsive ou tractive 7.

Selon un premier exemple de giravion 1, une telle hélice propulsive ou tractive 7 est portée par la poutre de queue 5 et est agencée au niveau d'un empennage arrière 15

La seconde installation motrice 8 est également portée par la poutre de queue 5 et est agencée au niveau de l'empennage arrière 15.

De plus, le giravion 1 comporte au moins un organe de commande 10 configuré pour générer une consigne de commande du ou des moteurs électriques 9. Un tel organe de commande 10 est alors relié par voie filaire ou non filaire à un calculateur de commande non représenté recevant les consignes de commande générés par un pilote humain ou automatique du giravion au moyen de l'organe de commande 10. Le calculateur de commande génère alors une information de commande. Cette information de commande est ensuite transmise à la seconde installation motrice 8 pour générer le second couple moteur transmis à l'hélice propulsive ou tractive 7.

Tel que représenté à la figure 2 selon un deuxième exemple de giravion 11, la structure porteuse 19 peut présenter également une aile 12 s'étendant en dessous du rotor principal 3.

En outre, une telle aile 12 peut s'étendre symétriquement par rapport à un plan antéropostérieur. Cette aile 12 peut également comporter une demi aile gauche 13 agencée d'un coté gauche du plan du plan antéropostérieur et une demi aile droite 14 agencée d'un coté droit du plan du plan antéropostérieur.

Avantageusement, une telle aile 12 peut être escamotable et rapportée sur la structure porteuse 19 par exemple en fonction de la mission à réaliser. De même, l'hélice propulsive ou tractive 7 et la seconde installation motrice 8 peuvent également être agencées de manière escamotable avec l'empennage arrière 15 du giravion 11.

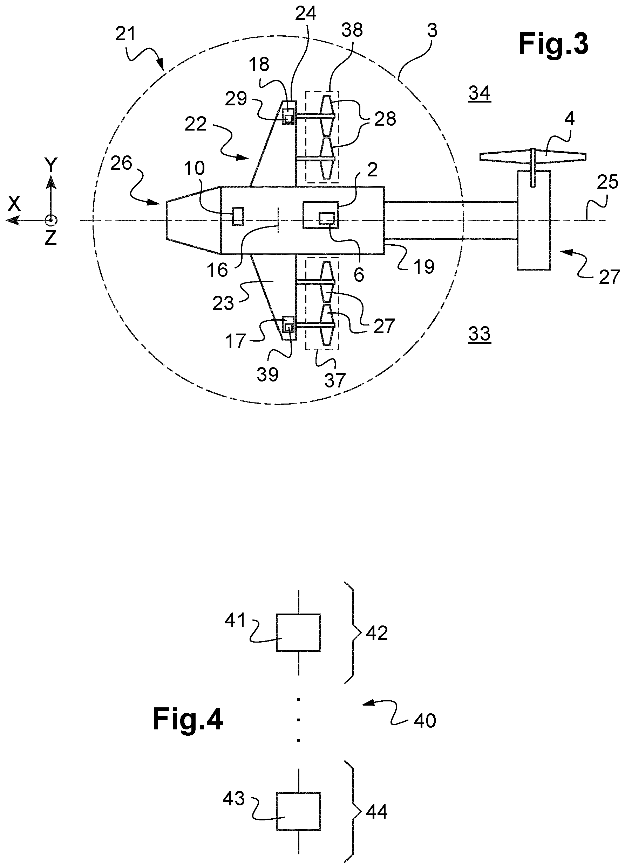

Par ailleurs, un troisième exemple de giravion 21 est représenté à la figure 3, au moins deux hélices propulsives ou tractives 27, 28 et des secondes installations motrices 17, 18 peuvent être portées par une aile 22 agencée en dessous du rotor principal 3 suivant la direction en élévation Z parallèle à l'axe de rotation 16 du rotor principal 3.

Bien entendu selon un autre exemple de giravion non représenté, une aile peut également comporter une seule hélice propulsive ou tractive. Une telle aile peut dès lors présenter une demi aile gauche et une demi aile droite. L'hélice propulsive ou tractive est alors agencée sur une demi aile droite ou gauche, l'autre demi aile gauche ou droite comporte dans ce cas aucune hélice propulsive ou tractive.

Selon encore un autre exemple de giravion non représenté, une aile peut également comporter deux hélices propulsives ou tractives. Cette aile peut également présenter une demi aile gauche et une demi aile droite. Une hélice propulsive ou tractive gauche est alors agencée sur une demi aile gauche et une hélice propulsive ou tractive droite est quant à elle agencée sur une demi aile droite.

Telle que représentée à la figure 3, une telle aile 22 comporte une demi aile gauche 23 et une demi aile droite 24 agencées respectivement d'un coté gauche 33 et d'un coté droit 34 d'un plan antéropostérieur 25 du giravion 21. Un tel plan antéropostérieur 25 peut être défini comme étant un plan médian orienté verticalement et s'étendant entre une zone avant 26 et une zone arrière 27 du giravion 21 selon la direction longitudinale X.

Par ailleurs, un tel giravion 21 peut comprendre d'une part un premier groupe 37 d'au moins deux hélices propulsives ou tractives 27, ce premier groupe 37 étant porté par la demi aile gauche 23 et d'autre part un second groupe 38 d'au moins deux autres hélices propulsives ou tractives 28, ce second groupe 38 étant porté par la demi aile droite 24.

Tel que représenté selon ce troisième exemple de giravion 21, le premier groupe 37 comporte deux hélices propulsives ou tractives 27 et le second groupe 38 comporte deux autres hélices propulsives ou tractives 28. Selon d'autres exemples de giravions non représentés, les premier et second groupes 37 et 38 peuvent également comporter chacun trois ou quatre hélices propulsives ou tractives 27 et 28.

Par ailleurs, le premier groupe 37 et le second groupe 38 peuvent avantageusement être agencés symétriquement par rapport au plan antéropostérieur 25 du giravion 21.

Telle que représentée à la figure 4, l'invention se rapporte également au procédé de pilotage d'un tel giravion 1, 11, 21. Ainsi, un tel procédé 40 comporte deux modes de fonctionnement à savoir un mode de fonctionnement normal 42 et, si une panne se produit au niveau du rotor arrière 4, un mode de fonctionnement d'urgence 44.

Dans le mode de fonctionnement normal 42, le procédé de pilotage 40 comporte une étape de commande normale 41 du rotor arrière 4 de manière à générer au moins un troisième couple sur la structure porteuse 19 du giravion 1, 11, 21 et à permettre par exemple de contrôler les mouvements du giravion 1, 11, 21 autour d'un axe de lacet.

En revanche lorsqu'une panne est détectée au niveau du rotor arrière 4, alors le procédé de pilotage 40 bascule dans le mode de fonctionnement d'urgence 44.

Dans ce cas, le procédé de pilotage 40 comporte alors au moins une étape de commande d'urgence 43 de la ou des hélices propulsives ou tractives 7, 27, 28 de façon à générer le troisième couple sur ladite structure porteuse 19 du giravion 1, 11, 21.

Ainsi, uniquement dans le mode fonctionnement d'urgence la ou des hélices propulsives ou tractives 7, 27, 28 peuvent permettre de contrôler une trajectoire en lacet du giravion 1, 11, 21.

Dans le mode de fonctionnement d'urgence 44, le troisième couple peut ainsi être généré en faisant varier une poussée gauche d'au moins une hélice propulsive ou tractive gauche 27 par rapport à une poussée droite d'au moins une hélice propulsive ou tractive droite 28.

Inversement, le troisième couple peut également être généré en faisant varier la poussée droite d'au moins une hélice propulsive ou tractive droite 28 par rapport à la poussée gauche d'au moins une hélice propulsive ou tractive gauche 27.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Giravion (1, 11, 21) comportant une première installation motrice (2), au moins un rotor principal (3) participant au moins à la sustentation dudit giravion (1, 11, 21) dans les airs et au moins un rotor arrière (4) porté par une poutre de queue (5) dudit giravion (1, 11, 21), ladite première installation motrice (2) comportant au moins un moteur à combustion (6), ledit giravion (1, 11, 21) comportant :
• au moins une hélice propulsive ou tractive (7, 27, 28) indépendante dudit au moins un rotor principal (3), ladite au moins une hélice propulsive ou tractive (7, 27, 28) participant au moins à la propulsion ou à la traction dudit giravion (1, 11, 21),
• une seconde installation motrice (8, 17, 18) comportant au moins un moteur électrique (9, 29, 39) transmettant un second couple moteur à ladite au moins une hélice propulsive ou tractive (7, 27, 28) et,
• au moins un organe de commande (10) configuré pour générer une consigne de commande dudit au moins un moteur électrique (9, 29, 39);
**caractérisé en ce que** ledit giravion (1, 11, 21) comporte au moins un arbre de sortie du moteur à combustion (6) et au moins une boite de transmission de puissance reliée à cet arbre de sortie agencé pour transmettre un premier couple moteur auxdits au moins un rotor principal (3) et au moins un rotor arrière (4).

2. Giravion selon la revendication 1,
**caractérisé en ce que** ladite au moins une hélice propulsive ou tractive (7) et ladite seconde installation motrice (8) sont portées par ladite poutre de queue (5) et agencées au niveau d'un empennage arrière (15).

3. Giravion selon la revendication 2,
**caractérisé en ce que** ledit giravion (11) comporte au moins une aile (12) agencée en dessous dudit au moins un rotor principal (3) suivant une direction en élévation Z parallèle à un axe de rotation (16) dudit au moins un rotor principal (3).

4. Giravion selon la revendication 1,
**caractérisé en ce que** ladite au moins une hélice propulsive ou tractive (27, 28) et ladite seconde installation motrice (17, 18) sont portées par une aile (22) agencée en dessous dudit au moins un rotor principal (3) suivant une direction en élévation Z parallèle à un axe de rotation (16) dudit au moins un rotor principal (3).

5. Giravion selon la revendication 4,
**caractérisé en ce que** ladite aile (22) comporte une demi aile gauche (23) et une demi aile droite (24) agencées respectivement d'un coté gauche (33) et d'un coté droit (34) d'un plan antéropostérieur (25) dudit giravion (21), ledit plan antéropostérieur (25) étant défini par un plan médian orienté verticalement et s'étendant entre une zone avant (26) et une zone arrière (27) dudit giravion (21).

6. Giravion selon la revendication 5,
**caractérisé en ce que** ladite au moins une hélice propulsive ou tractive (27, 28) comporte au moins deux hélices propulsives ou tractives (27) appartenant à un premier groupe (37), ledit premier groupe (37) étant porté par ladite demi aile gauche (23), et ladite d'au moins une hélice propulsive ou tractive (27, 28) comportant au moins deux hélices propulsives ou tractives (28) appartenant à un second groupe (38), ledit second groupe (38) étant porté par ladite demi aile droite (24).

7. Giravion selon la revendication 6,
**caractérisé en ce que** ledit premier groupe (37) d'au moins deux hélices propulsives ou tractives (27) et ledit second groupe (38) d'au moins deux autres hélices propulsives ou tractives (28) comportent respectivement chacun un même nombre N d'hélices propulsives ou tractives (27, 28).

8. Giravion selon la revendication 7,
**caractérisé en ce que** ledit premier groupe (37) d'au moins deux hélices propulsives ou tractives (27) et ledit second groupe (38) d'au moins deux autres hélices propulsives ou tractives (28) sont agencés symétriquement par rapport audit plan antéropostérieur (25) dudit giravion (21).

9. Giravion selon l'une quelconque des revendications 1 à 8,
**caractérisé en ce que** ledit au moins un moteur à combustion (6) est choisi parmi le groupe comportant les moteurs thermiques à pistons, les moteurs thermiques rotatifs et les turbomoteurs.

10. Procédé de pilotage d'un giravion selon l'une quelconque des revendications 1 à 9,
**caractérisé en ce que**, dans un mode de fonctionnement normal (42), ledit procédé de pilotage (40) comporte au moins une étape de commande normale (41) dudit au moins un rotor arrière (4) pour générer au moins un troisième couple sur une structure porteuse (19) dudit giravion (1, 11, 21) et, dans un mode de fonctionnement d'urgence (44), ledit procédé de pilotage (40) comporte au moins une étape de commande d'urgence (43) de ladite au moins une hélice propulsive ou tractive (7, 27, 28) pour générer ledit troisième couple sur ladite structure porteuse (19) dudit giravion (1, 11, 21).

11. Procédé de pilotage selon la revendication 10,
**caractérisé en ce que**, dans ledit mode de fonctionnement d'urgence (44), ledit troisième couple est généré en faisant varier une poussée gauche d'au moins une hélice propulsive ou tractive gauche (27) par rapport à une poussée droite d'au moins une hélice propulsive ou tractive droite (28), lesdites au moins une hélice propulsive ou tractive gauche (27) et au moins une hélice propulsive ou tractive droite (28) étant agencées respectivement d'un coté gauche (33) et d'un coté droit (34) d'un plan antéropostérieur (25) dudit giravion (21), ledit plan antéropostérieur (25) étant défini par un plan médian orienté verticalement et s'étendant entre une zone avant (26) et une zone arrière (27) dudit giravion (21).

## Patentansprüche

1. Drehflügelflugzeug (1, 11, 21) mit einer ersten Triebwerksanlage (2), mindestens einem Hauptrotor (3), der zumindest am Auftrieb des Drehflügelflugzeugs (1, 11, 21) in der Luft beteiligt ist, und mindestens einem Heckrotor (4), der von einem Heckträger (5) des Drehflügelflugzeugs (1, 11, 21) getragen wird, wobei die erste Triebwerksanlage (2) mindestens einen Verbrennungsmotor (6) umfasst, wobei das Drehflügelflugzeug (1, 11, 21) umfasst:
- mindestens einen Schub- oder Zugpropeller (7, 27, 28), der von dem mindestens einen Hauptrotor (3) unabhängig ist, wobei der mindestens eine Schub- oder Zugpropeller (7, 27, 28) zumindest am Vorschub oder am Vortrieb des Drehflügelflugzeugs (1, 11, 21) beteiligt ist,
- eine zweite Triebwerksanlage (8, 17, 18) mit mindestens einem Elektromotor (9, 29, 39), der ein zweites Antriebsdrehmoment auf den mindestens einen Schub- oder Zugpropeller (7, 27, 28) überträgt, und,
- mindestens ein Steuerorgan (10), das konfiguriert ist, um einen Sollwert für die Steuerung des mindestens einen Elektromotors (9, 29, 39) zu erzeugen;
**dadurch gekennzeichnet, dass** das Drehflügelflugzeug (1, 11, 21) mindestens eine Ausgangswelle des Verbrennungsmotors (6) und mindestens ein mit dieser Ausgangswelle verbundenes Kraftübertragungsgetriebe umfasst, das eingerichtet ist, um ein erstes Antriebsdrehmoment auf den mindestens einen Hauptrotor (3) und den mindestens einen Heckrotor (4) zu übertragen.

2. Drehflügelflugzeug nach Anspruch 1,
**dadurch gekennzeichnet, dass** der mindestens eine Schub- oder Zugpropeller (7) und die zweite Triebwerksanlage (8) von dem Heckträger (5) getragen und auf Höhe eines Heckleitwerks (15) angeordnet sind.

3. Drehflügelflugzeug nach Anspruch 2,
**dadurch gekennzeichnet, dass** das Drehflügelflugzeug (11) mindestens einen Flügel (12) aufweist, der unterhalb des mindestens einen Hauptrotors (3) in einer zu einer Drehachse (16) des mindestens einen Hauptrotors (3) parallelen Elevationsrichtung Z angeordnet ist.

4. Drehflügelflugzeug nach Anspruch 1,
**dadurch gekennzeichnet, dass** der mindestens eine Schub- oder Zugpropeller (27, 28) und die zweite Triebwerksanlage (17, 18) von einem Flügel (22) getragen sind, der unterhalb des mindestens einen Hauptrotors (3) in einer zu einer Drehachse (16) des mindestens einen Hauptrotors (3) parallelen Elevationsrichtung Z angeordnet ist.

5. Drehflügelflugzeug nach Anspruch 4,
**dadurch gekennzeichnet, dass** der Flügel (22) eine linke Flügelhälfte (23) und eine rechte Flügelhälfte (24) aufweist, die jeweils auf einer linken Seite (33) und einer rechten Seite (34) einer anteroposterioren Ebene (25) des Drehflügelflugzeugs (21) angeordnet sind, wobei die anteroposteriore Ebene (25) durch eine vertikal ausgerichtete Mittelebene definiert ist und sich zwischen einem vorderen Bereich (26) und einem hinteren Bereich (27) des Drehflügelflugzeugs (21) erstreckt.

6. Drehflügelflugzeug nach Anspruch 5,
**dadurch gekennzeichnet, dass** der mindestens eine Schub- oder Zugpropeller (27, 28) mindestens zwei Schub- oder Zugpropeller (27) umfasst, die zu einer ersten Gruppe (37) gehören, wobei die erste Gruppe (37) von der linken Flügelhälfte (23) getragen ist, und der mindestens eine Schub- oder Zugpropeller (27, 28) mindestens zwei Schub- oder Zugpropeller (28) umfasst, die zu einer zweiten Gruppe (38) gehören, wobei die zweite Gruppe (38) von der rechten Flügelhälfte (24) getragen ist.

7. Drehflügelflugzeug nach Anspruch 6,
**dadurch gekennzeichnet, dass** die erste Gruppe (37) von mindestens zwei Schub- oder Zugpropellern (27) und die zweite Gruppe (38) von mindestens zwei weiteren Schub- oder Zugpropellern (28) jeweils eine gleiche Anzahl N von Schub- oder Zugpropellern (27, 28) aufweisen.

8. Drehflügelflugzeug nach Anspruch 7,
**dadurch gekennzeichnet, dass** die erste Gruppe (37) von mindestens zwei Schub- oder Zugpropellern (27) und die zweite Gruppe (38) von mindestens zwei weiteren Schub- oder Zugpropellern (28) symmetrisch in Bezug auf die anteroposteriore Ebene (25) des Drehflügelflugzeugs (21) angeordnet sind.

9. Drehflügelflugzeug nach einem der Ansprüche 1 bis 8,
**dadurch gekennzeichnet, dass** der mindestens eine Verbrennungsmotor (6) aus der Gruppe ausgewählt ist, die aus Kolbenverbrennungsmotoren, Rotationsverbrennungsmotoren und Turbomotoren besteht.

10. Verfahren zum Steuern eines Drehflügelflugzeugs nach einem der Ansprüche 1 bis 9,
**dadurch gekennzeichnet, dass** in einem normalen Betriebsmodus (42) das Steuerverfahren (40) mindestens einen Schritt des normalen Steuerns (41) des mindestens einen Heckrotors (4) umfasst, um mindestens ein drittes Drehmoment an einer Tragstruktur (19) des Drehflügelflugzeugs (1, 11, 21) zu erzeugen, und, in einem Notbetriebsmodus (44) das Steuerungsverfahren (40) mindestens einen Schritt des Notsteuerns (43) des mindestens einen Schub- oder Zugpropellers (7, 27, 28) umfasst, um das dritte Drehmoment an der Tragstruktur (19) des Drehflügelflugzeugs (1, 11, 21) zu erzeugen.

11. Steuerverfahren nach Anspruch 10,
**dadurch gekennzeichnet, dass** in dem Notbetriebsmodus (44) das dritte Drehmoment erzeugt wird, indem ein linker Schub von mindestens einem linken Schub- oder Zugpropeller (27) relativ zu einem rechten Schub von mindestens einem rechten Schub- oder Zugpropeller (28) variiert wird, wobei der mindestens eine linke Schub- oder Zugpropeller (27) und der mindestens eine rechte Schub- oder Zugpropeller (28) jeweils auf einer linken Seite (33) und einer rechten Seite (34) einer anteroposterioren Ebene (25) des Drehflügelflugzeugs (21) angeordnet sind, wobei die anteroposteriore Ebene (25) durch eine vertikal ausgerichtete Mittelebene definiert ist und sich zwischen einer vorderen Zone (26) und einer hinteren Zone (27) des Drehflügelflugzeugs (21) erstreckt.

## Claims

1. Rotorcraft (1, 11, 21) including a first power plant (2), at least one main rotor (3) participating at least in providing lift for said rotorcraft (1, 11, 21) in the air, and at least one tail rotor (4) carried by a tail boom (5) of said rotorcraft (1, 11, 21), said first power plant (2) including at least one combustion engine (6),
said rotorcraft (1, 11,21) including:
• at least one pusher or puller propeller (7, 27, 28) independent of said at least one main rotor (3), said at least one pusher or puller propeller (7, 27, 28) at least participating in the propulsion or traction of said rotorcraft (1, 11, 21),
• a second power plant (8, 17, 18) including at least one electric motor (9, 29, 39) transmitting a second drive torque to said at least one pusher or puller propeller (7, 27, 28) and,
• at least one control member (10) configured to generate a control setpoint of said at least one electric motor (9, 29, 39);
**characterized in that** said rotorcraft (1, 11, 21) includes at least one outlet shaft of the combustion engine (6) and at least one power transmission unit connected to this output shaft arranged to transmit a first drive torque to said at least one main rotor (3) and to the at least one rear rotor (4).

2. Rotorcraft according to Claim 1,
**characterized in that** said at least one pusher or puller propeller (7) and said second power plant (8) are carried by said tail boom (5) and arranged in the plane of a rear tail assembly (15).

3. Rotorcraft according to Claim 2,
**characterized in that** said rotorcraft (11) includes at least one wing (12) arranged below said at least one main rotor (3) following an elevation direction Z parallel to an axis of rotation (16) of said at least one main rotor (3).

4. Rotorcraft according to Claim 1,
**characterized in that** said at least one pusher or puller propeller (27, 28) and said second power plant (17, 18) are carried by a wing (22) arranged below said at least one main rotor (3) following an elevation direction Z parallel to an axis of rotation (16) of said at least one main rotor (3).

5. Rotorcraft according to Claim 4,
**characterized in that** said wing (22) includes a left half-wing (23) and a right half-wing (24) arranged on a left side (33) and on a right side (34), respectively, of an anteroposterior plane (25) of said rotorcraft (21), said anteroposterior plane (25) being defined by a mid-plane oriented vertically and extending between a front zone (26) and a rear zone (27) of said rotorcraft (21).

6. Rotorcraft according to Claim 5,
**characterized in that** said at least one pusher or puller propeller (27, 28) includes at least two pusher or puller propellers (27) belonging to a first group (37), said first group (37) being carried by said left half-wing (23), and said at least one pusher or puller propeller (27, 28) including at least two pusher or puller propellers (28) belonging to a second group (38), said second group (38) being carried by said right half-wing (24).

7. Rotorcraft according to Claim 6,
**characterized in that** said first group (37) of at least two pusher or puller propellers (27) and said second group (38) of at least two other pusher or puller propellers (28) each have the same number N of pusher or puller propellers (27, 28).

8. Rotorcraft according to Claim 7,
**characterized in that** said first group (37) of at least two pusher or puller propellers (27) and said second group (38) of at least two other pusher or puller propellers (28) are arranged symmetrically with respect to said anteroposterior plane (25) of said rotorcraft (21).

9. Rotorcraft according to any one of Claims 1 to 8,
**characterized in that** said at least one combustion engine (6) is chosen from the group including piston engines, rotary engines and turboshaft engines.

10. Method for piloting a rotorcraft according to any one of Claims 1 to 9,
**characterized in that** in a normal operating mode (42), said piloting method (40) includes at least one normal control step (41) of said at least one rear rotor (4) so as to generate at least a third torque on a carrier structure (19) of said rotorcraft (1, 11, 21) and, in an emergency operating mode (44), said piloting method (40) includes at least one emergency control step (43) of said at least one pusher or puller propeller (7, 27, 28) so as to generate said third torque on said carrier structure (19) of said rotorcraft (1, 11, 21 ).

11. Method for piloting according to Claim 10,
**characterized in that** in said emergency operating mode (44), said third torque is generated by causing a left thrust from at least one left pusher or puller propeller (27) to vary relative to a right thrust from at least one right pusher or puller propeller (28), said at least one pusher or puller propeller (27) and at least one pusher or puller propeller (28) being arranged on a left side (33) and on a right side (34), respectively, of an anteroposterior plane (25) of said rotorcraft (21 ), said anteroposterior plane (25) being defined by a mid-plane oriented vertically and extending between a front zone (26) and a rear zone (27) of said rotorcraft (21).
